# Europäisches Patentamt
## European Patent Office
### Office européen des brevets

(11) Veröffentlichungsnummer: **0 275 964**
**A2**

## (12) EUROPÄISCHE PATENTANMELDUNG

(21) Anmeldenummer: **88100661.3**

(22) Anmeldetag: **19.01.88**

(51) Int. Cl.⁴: **H04Q 11/04 , H04M 11/06**

(30) Priorität: **21.01.87 DE 3701590**

(43) Veröffentlichungstag der Anmeldung:
**27.07.88 Patentblatt 88/30**

(84) Benannte Vertragsstaaten:
**AT BE CH FR GB IT LI LU NL**

(71) Anmelder: **TELENORMA Telefonbau und Normalzeit GmbH**
**Mainzer Landstrasse 128-146**
**D-6000 Frankfurt am Main(DE)**

(72) Erfinder: **Leicher, Gerhard, Dipl.-Ing.**
**Giessfeldstrasse 2**
**D-6000 Frankfurt/Main(DE)**
Erfinder: **Theis, Harald, Dipl.-Ing.**
**Leibnizstrasse 33**
**D-6500 Mainz 1(DE)**

(54) **Verfahren zur Umsetzung von Nutzdaten bei dienste-integrierenden Kommunikationsanlagen.**

㉗ Von einem anzurufenden Endgerät aus werden über das Anschlußorgan Kennzeichen in die Vermittlungsanlage eingegeben. Damit wird eine zentral angeordnete, dienste-spezifisch vorgesehene Umsetzeinrichtung automatisch in eine zu dem angerufenen Anschlußorgan führende Verbindung eingeschleift, wenn bei einer von einem anrufenden Anschlußorgan ausgehenden Verbindung festgetellt wird, daß für den betreffenden Dienst beim anrufenden Anschlußorgan nicht die gleiche Geräteklasse oder Geräteart vorhanden ist, wie beim angerufenen Anschlußorgan.

## Verfahren zur Umsetzung von Nutzdaten bei diensteintergrierenden Kommunikationsanlagen

Die Erfindung betrifft ein Verfahren zur Umsetzung von Nutzdaten bei dienste-integrierenden Kommunikationsanlagen nach dem Oberbegriff des Patentanspruches 1.

In den TN-Nachrichten 1986, Heft 89, ist auf Seite 3 ein Aufsatz mit dem Titel "Zukunftssichere Kommunikation mit Integral von TN" abgedruckt. Darin ist auf Seite 10 ein Übersichtsbild dargestellt, woraus ersichtlich ist, welche Arten von Informationsaustausch direkt oder mit Hilfe von sogenannten Servern in einem dienste-integrierenden Kommunikationsnetz stattfinden können. Für den Begriff Server wird auf Seite 9 eine Erläuterung angegeben und dabei von Server-Funktionen gesprochen. Diese Server-Funktionen - schließen eine Umsetzung von Daten ein, wenn dies bei miteinander vergleichbaren Diensten wegen unterschiedlicher Arbeitsgeschwindigkeiten der Geräte oder wegen der Verschiedenartigkeit der Daten nötig und auch möglich ist.

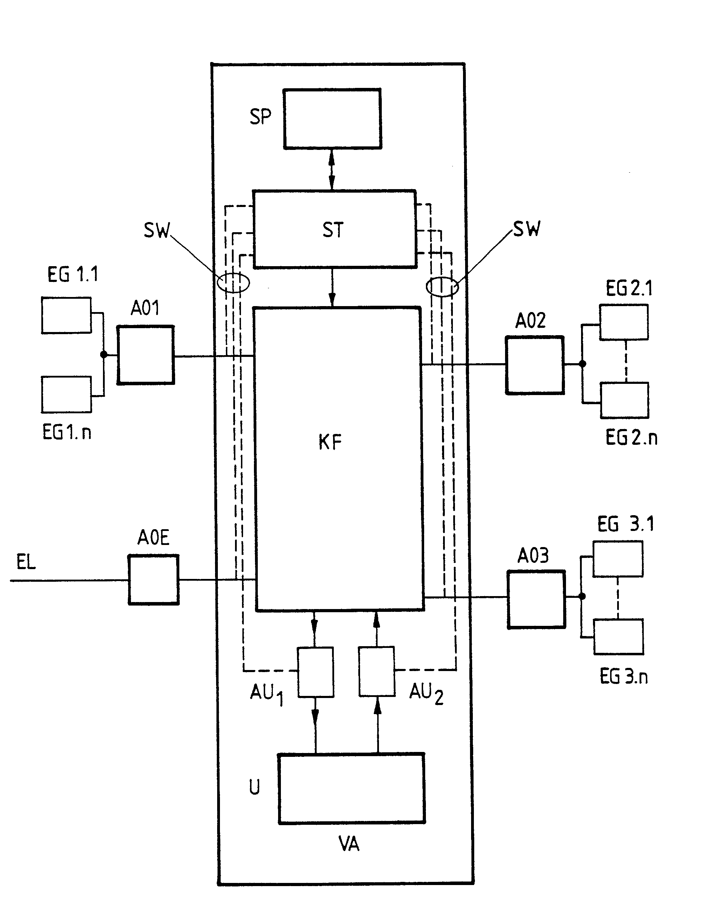

In dem erwähnten Aufsatz ist angegeben, daß für Dienstübergänge, Netzzugänge, Textverarbeitung besondere Merkmale vorhanden sein können. Es ist zwar in Bild 14 dargestellt, daß z.B. Text-Server zentral angeordnet sein können, es ist aber nichts darüber ausgesagt, auf welche Weise derartige Server an einer Verbindung beteiligt werden.

Die Aufgabe der Erfindung besteht darin, ein Verfahren anzugeben, womit zentral angeordnete Umsetzeinrichtungen bei dienste-integrierenden Kommunikationsanlagen zu Server-Funktionen herangezogen werden können, ohne daß bei den Anschlußorganen oder Endgeräten Vorleistungen erforderlich sind, und ohne daß vom Teilnehmer aus besondere Bedienungsprozeduren notwendig sind.

Diese Aufgabe wird mit einer Merkmalskombination gelöst, wie sie im Patentanspruch 1 angegeben ist.

Damit wird in vorteilhafter Weise erreicht, daß bei Verbindungen, bei denen zwar an beiden Enden der Verbindung Endgeräte für den angebotenen Dienst vorhanden sind, die aber nicht ohne weiteres miteinander kommunizieren können, automatisch durch Hinzuschalten einer Umsetzeinrichtung die Verbindung ermöglicht wird. Die Notwendigkeit der Anschaltung einer Umsetzeinrichtung wird dabei, z.B. beim Austausch von Signalisierungsinformation durch die Endgeräte, automatisch erkannt. Durch Eingabe von Kennzeichen in die Vermittlungsanlage, womit auch gleichzeitig die Art der anzuschaltenden Umsetzeinrichtung vorbestimmt wird, wird sichergestellt, daß die Umsetzeinrichtung zum richtigen Zeitpunkt in eine im Aufbau befindliche oder in eine bestehende Verbindung eingeschleift wird. Weiterbildungen der Erfindung sind in den Unteransprüchen angegeben.

Ein Ausführungsbeispiel der Erfindung wird nachfolgend anhand einer Zeichnung näher beschrieben. In der Zeichnung ist ein Übersichtsschaltbild einer dienste-integrierenden Kommunikationsanlage, Vermittlungsanlage VA dargestellt. Daran angeschlossen sind Anschlußorgane AO1, AO2, AO3, die mit Endgeräten EG1.1 bis EG1.n, EG2.1 bis EG2.n und EG3.1 bis EG3.n beschaltet sind. Selbstverständlich sind in der Realität mehr als nur diese drei Anschlußorgane vorhanden. Außerdem sind Anschlußorgane AOE vorgesehen, woran zu anderen Vermittlungsanlagen führende Externleitungen EL angeschlossen sind. Alle Anschlußorgane AO lassen sich über ein Koppelfeld KF miteinander verbinden, sofern die vermittlungstechnischen Gegebenheiten dies zulassen.

Für den Aufbau und den Abbau von Verbindungen innerhalb des Koppelfeldes KF ist eine Steuereinrichtung ST vorgesehen, die in bekannter Weise Einstellinformationen über von den Anschlußorganen AO ausgehende Signalwege SW erhält.

Außer den bereits beschriebenen Anschlußorganen AO sind weitere Anschlußorgane AU1, AU2 vorgesehen, woran Umsetzeinrichtungen U angeschlossen sind. Stellvertretend für alle Arten von denkbaren Umsetzeinrichtungen ist in der Zeichnung nur eine Umsetzeinrichtung U dargestellt. Der Einfachheit halber ist außerdem nur eine Signalrichtung angegeben. Eine Umsetzeinrichtung U wird dienste-spezifisch immer dann bei einer Verbindung zu Hilfe genommen, wenn ein direkter Austausch von Nutzdaten zwischen den Endgeräten EG nicht möglich ist.

Von den vielen sich bei dienste-integrierenden Kommunikationsanlagen ergebenden Möglichkeiten soll nur eine ausführlicher erläutert werden. Es sei angenommen, daß eine Verbindung zwischen den Anschlußorganen AO1 und AO2 aufgebaut werden soll, wobei es sich um eine Telefaxverbindung handelt. Eine solche Verbindung ist auf direktem Wege nur möglich, wenn die für diesen Dienst erforderlichen Endgeräte der gleichen Gruppe angehören. Wenn dies nicht der Fall ist, so muß eine Umsetzung der Nutzdaten stattfinden, wenn die Verbindung trotzdem möglich sein soll.

Dies geschieht erfindungsgemäß im Zuge des Verbindungsaufbaus automatisch dadurch, daß vom anzurufenden Endgerät EG2.1 über das Anschlußorgan AO2 im Zuge des Verbindungsaufbaus bei der Übermittlung von Signalisierungsdaten über den Signalweg SW der Steuereinrichtung ST mitgeteilt wird, welche Gerätegruppe bei dem anzurufenden Endgerät EG2.1 installiert ist. Da außerdem ebenfalls über die Signalisierungswege SW die entsprechenden Daten vom anrufenden Endgerät EG1.1 vorliegen, und auch der angebotene Dienst Telefax vorliegt, wird von der Steuereinrichtung ST eine entsprechende Umsetzeinrichtung U belegt. Die Verbindung wird also dann im Koppelfeld KF nicht direkt zwischen den Anschlußorganen AO1 und AO2 durchgeschaltet. Stattdessen wird das Anschlußorgan AO1 mit einem an einem Eingang der für diese Verbindung ausgewählten Umsetzeinrichtung U angeschlossenen Anschlußorgan AU1 verbunden. Ein am Ausgang der betreffenden Umsetzeinrichtung U angeschlossenes Anschlußorgan AU2 wird mit dem Anschlußorgan AO2 des anzurufenden Endgerätes EG2.1 zusammengeschaltet. Auf diese Weise ist die Umsetzeinrichtung U in die betreffende Verbindung eingeschleift, so daß die Datenübertragung stattfinden kann. Dabei enthält die Umsetzeinrichtung U Speicher für die in diesem Fall notwendige Anpassung der verschiedenen Arbeitsgeschwindigkeiten der verschiedenen Endgeräte EG1.1 und EG2.1.

Eine Vereinfachung beim Verbindungsaufbau kann dadurch erreicht werden, daß ein Speicher SP vorgesehen ist, worin durch den Teilnehmer über das Endgerät EG abgebbare Kennzeichen dienstespezifisch im Zusammenhang mit der Adresse oder Rufnummer des Anschlußorgans AO gespeichert werden. Wenn ein solcher Speicher SP vorgesehen ist, wird nach der Abgabe der Wahlinformation von einem anrufenden Endgerät, z.B. EG1.n, aus zunächst über die Steuereinrichtung ST dieser Speicher SP angesteuert. Beim Auslesen der dort gespeicherten Daten wird festgestellt, welche Endgeräte EG an der aufzubauenden Verbindung beteiligt sein werden. Dies geschieht in Abhängigkeit von dem jeweils angebotenen Dienst, so daß festgetellt werden kann, welche Art von Umsetzeinrichtung U für diese aufzubauende Verbindung benötigt wird. Es wird daraufhin eine freie Umsetzeinrichtung U der betreffenden Art ausgewählt und zunächst nur eine Verbindung zwischen dem anrufenden Endgerät EG1.n und dem Anschlußorgan AU1 dieser Umsetzeinrichtung U hergestellt. Nach dem Aufbauen dieser Teilverbindung wird von der Umsetzeinrichtung U aus das Ausgangs-Anschlußorgan AU2 belegt, worüber dann durch automatische Abgabe der zuvor gespeicherten Wahlinformation das anzurufende Anschlußorgan AO2 und das gewünschte, daran angeschlossene Endgerät, z.B. EG1.n angesteuert wird. Wenn dann das angerufene Endgerät EG2.n seine Empfangsbereitschaft meldet, so wird dieses Kennzeichen zunächst zur Umsetzeinrichtung U übertragen und von dort dem anrufenden Endgerät EG1.n mitgeteilt. Danach kann die Übertragung von Nutzdaten stattfinden, die von der Umsetzeinrichtung U dann in der richtigen Weise umgesetzt zum angerufenen Endgerät EG2.n gelangen.

Da die Umsetzeinrichtungen U jeweils für einen bestimmten Dienst ausgelegt sind, können auch andere Arten von Nutzdaten - Umsetzungen z.B Telex zu Teletex und umgekehrt, durchgeführt werden, wenn entsprechende Umsetzeinrichtungen vorhanden sind. Darüber hinaus ist es noch denkbar, daß in gewissem Umfang Umsetzungen von Text in Sprache, Bildschirmtext in Teletex usw. stattfinden können, wenn dies als sinnvoll angesehen wird. Es kann zweckmäßig sein, daß die Umsetzeinrichtungen entweder an ihrem Eingang oder an ihrem Ausgang für eine bestimmte Geräteklasse bzw. für eine bestimmte Gerätegruppe ausgelegt sind und an mehreren Ausgängen bzw. Eingängen die jeweils anderen Klassen bzw. Gruppen von Endgeräten des jeweils gleichen Dienstes oder auch, wie zuvor angedeutet, eines anderen Dienstes bedienen können. Es ist natürlich eine Frage der Wirtschaftlichkeit, in welchem Umfang Umsetzeinrichtungen U für möglichst viele Anwendungsfälle vorgesehen werden können.

Da moderne Kommunikationsanlagen, insbesondere Vermittlungsanlagen VA nicht nur die verschiedensten Arten des Informationsaustausches anbieten, sondern auch viele vermittlungstechnische Merkmale anbieten, die den Teilnehmern einen erhöhten Bedienungskomfort bieten, muß dies auch beim Einsatz von Umsetzeinrichtungen U berücksichtigt werden können. Bei einer bestehenden Rufumleitung, von einem anzurufenden Anschlußorgan AO2 zu einem anderen Anschlußorgan AO3 kommt eine Verbindung in der zuvor beschriebenen Art ebenfalls zustande. Dies geschieht dadurch, daß beim Einleiten einer Rufumleitung die Gerätedaten des einen umgeleiteten Anruf empfangenden Anschlußorgans AO3 ebenfalls in den für die Aufnahme von Teilnehmer-Kennzeichnungen vorgesehenen Speicher SP eingetragen werden. Der Verbindungsaufbau erfolgt dabei wie zuvor beschrieben in zwei Etappen, wobei zunächst eine Umsetzeinrichtung U angesteuert wird, die entsprechend dem Endgerät, z.B. EG3.1 ausgewählt wurde, welches den umgeleiteten Anruf empfangen soll. Danach wird von dieser Umsetzeinrichtung U aus das betreffende Endgerät EG3.1 angesteuert. Alle weiteren Prozeduren bis zur Herstellung der Verbindung laufen dann so ab wie zuvor beschrieben worden ist.

## Ansprüche

1. Verfahren zur Umsetzung von Nutzdaten bei dienste-integrierenden Kommunikationsanlagen, wobei am Anschlußorgan einer Vermittlungsanlage mehrere verschiedenartige Endgeräte unterschiedlicher Klassen anschließbar sind, und Verbindungen zwischen den Endgeräten herstellbar sind, wenn Endgeräte gleicher Klassen für den angebotenen Dienst auf beiden Seiten vorhanden sind,
dadurch gekennzeichnet,
daß von einem anzurufenden Endgerät (EG2.1 bis EG2.n) über das Anschlußorgan (AO2) durch Eingabe von Kennzeichen in die Vermittlungsanlage (VA) eine für die bei diesem Anschlußorgan (AO2) vorhandene Geräteklasse vorgesehene zentral angeordnete Umsetzeinrichtung (U) dienstespezifisch automatisch in eine zu dem angerufenen Anschlußorgan (AO2) führende Verbindung eingeschleift wird, wenn bei einer von einem anrufenden Anschlußorgan (AO1) ausgehenden Verbindung festgestellt wird, daß für den betreffenden Dienst beim anrufenden Anschlußorgan (AO1) nicht die gleiche Geräteklasse oder Geräteart vorhanden ist, wie beim angerufenen Anschlußorgan (AO2).

2. Verfahren nach Anspruch 1,
dadurch gekennzeichnet,
daß ein Speicher (SP) in der Vermittlungsanlage (VA) vorgesehen ist, worin durch den Teilnehmer über das Endgerät (EG) abgebbare Kennzeichen dienste-spezifisch im Zusammenhang mit der Adresse oder Rufnummer des betreffenden Anschlußorgans (AO) gespeichert werden, daß die von einem anrufenden Anschlußorgan (AO1) ausgehende Verbindung zu einer Umsetzeinrichtung (U) für den betreffenden Dienst und die betreffenden Geräteklassen umgeleitet wird, wobei von der Umsetzeinrichtung (U) aus automatisch das anzurufende Anschlußorgan (AO2) angesteuert wird, wenn im Speicher (SP) eine entsprechende Kennzeichnung für das anzurufende Anschlußorgan (AO2) vorliegt.

3. Verfahren nach Anspruch 1,
dadurch gekennzeichnet,
daß nach dem Aufbau einer Verbindung automatisch eine Umschaltung in der Vermittlungsanlage (VA) des angerufenen Anschlußorgans (AO2) erfolgt, wobei beide Anschlußorgane (AO1,AO2) mit einer Umsetzeinrichtung (U) verbunden werden, wenn bei einem Austausch der Geräteklassen-Kennzeichnungen zwischen den Anschlußorganen (AO1,AO2) festgestellt wird, daß nicht die gleichen Geräteklassen vorhanden sind.

4. Verfahren nach einem der Ansprüche 1 bis 3,
dadurch gekennzeichnet,
daß die Eingänge und Ausgänge der Umsetzeinrichtungen (U) wie Teilnehmeranschlüsse an das Koppelfeld (KF) der Vermittlungsanlage (VA) angeschlossen sind, ohne daß dafür Rufnummern vorgesehen sind.

5. Verfahren nach einem der Ansprüche 1 bis 3,
dadurch gekennzeichnet,

daß Umsetzeinrichtungen (U) von einem Anschlußorgan (AO1) aus mit einer Rufnummer gezielt anrufbar sind, wenn die Gerätekonfiguration an der anzurufenden Stelle bekannt ist.

6. Verfahren nach Anspruch 5,
dadurch gekennzeichnet,
daß nach der Anschaltung einer Umsetzeinrichtung durch Weiterwahl das anzurufende Anschlußorgan (AO2) erreicht wird, wobei durch ein vom anrufenden Teilnehmer aus abzugebendes Kennzeichen die Art der Umsetzfunktion bestimmt wird.

7. Verfahren nach Anspruch 6,
dadurch gekennzeichnet,
daß das die Art der Umsetzfunktion bestimmende Kennzeichen Bestandteil der Rufnummer ist.

8. Verfahren nach Anspruch 6,
dadurch gekennzeichnet,
daß das die Art der Umsetzfunktion bestimmende Kennzeichen über den Signalisierungskanal abgegeben wird.

9. Verfahren nach Anspruch 5,
dadurch gekennzeichnet,
daß mehrere Umsetzeinrichtungen für einen Dienst vorgesehen sind, die mit einer Rufnummer angewählt und wie ein Sammelanschluß betrieben werden.

10. Verfahren nach einem der Ansprüche 1 bis 3,
dadurch gekennzeichnet,
daß die Umsetzeinrichtung (U) für einen bestimmten Dienst ausgelegt sind, einen Eingang für eine bestimmte Geräteklasse aufweisen und an ihren Ausgängen die umgesetzten Daten für die übrigen Geräteklassen des gleichen Dienstes anbieten.

11. Verfahren nach einem der Ansprüche 1 bis 3,
dadurch gekennzeichnet,
daß die Umsetzeinrichtung (U) für einen bestimmten Dienst ausgelegt sind, einen Ausgang für eine bestimmte Geräteklasse aufweisen und an ihren Eingängen die Daten der übrigen Geräteklassen des gleichen Dienstes empfangen können.

12. Verfahren nach einem der Ansprüche 1 bis 3,
dadurch gekennzeichnet,
daß zu einem anrufenden Endgerät (z.B. EG1.1) hin signalisiert wird, wenn eine Umleitung zu einer Umsetzeinrichtung (U) stattfindet.

13. Verfahren nach einem der Ansprüche 1 bis 3,
dadurch gekennzeichnet,
daß einem angerufenen Endgerät (z.B. EG1.1) von der Umsetzeinrichtung (U) aus signalisiert wird, daß eine Umsetzung stattfindet, wobei die Geräteklassen übermittelt werden.

14. Verfahren nach einem der Ansprüche 1 bis 3,
dadurch gekennzeichnet,

daß zumindestens einem der an einer Verbindung beteiligten Endgeräte (EG) signalisiert wird, wenn eine für die betreffende Verbindung benötigte Umsetzeinrichtung (U) nicht vorhanden oder nicht verfügbar ist, bzw. eine Umsetzung nicht oder nur eingeschränkt durchführbar ist.

15. Verfahren nach Anspruch 2, dadurch gekennzeichnet, daß bei einer bereits bestehenden Rufumleitung oder Rufweiterleitung von einem anzurufenden Anschlußorgan (AO2) zu einem weiteren Anschlußorgan (AO3) die für das anzurufende Anschlßorgan (AO2) bestehende Vormerkspeicherung im Speicher (SP) auf das weitere Anschlußorgan (AO3) abgeändert wird, wobei die dafür bestehende Vormerkspeicherung entsprechend den dort vorhandenen Geräteklassen berücksichtigt wird, damit die jeweils richtige Umsetzeinrichtung (U) automatisch ausgewählt wird.